# EUROPEAN PATENT SPECIFICATION

(11) **EP 0 502 640 B1**
(45) Date of publication and mention of the grant of the patent: **03.11.1999**
(21) Application number: 92301495.5
(22) Date of filing: 24.02.1992
(51) Int. Cl.: B27K 3/15, C08L 97/02

(54) **Densification of lignocellulosic material**
Verdichtung von Lignocellulosematerialien
Densification de matières lignocellulosiques

(30) Priority: 23.02.1991 NZ 235036
(43) Date of publication of application: 09.09.1992
(73) Proprietor: HER MAJESTY THE QUEEN IN RIGHT OF NEW ZEALAND, ACTING BY AND THROUGH THE SECRETARY OF FORESTRY, Wellington (NZ)
(72) Inventor: Franich, Robert, Rotorua (NZ); Anderson, Kathryn, Rotorus (NZ)
(74) Representative: Lawrence, Malcolm Graham

(56) References cited:
- EP-A- 0 252 867
- US-A- 4 005 039
- US-A- 4 183 997

## Description

The invention comprises a method of densifying lignocellulosic material including wood, to form a composite material.

Porous and cellular or lignocellulosic materials, such as wood may be treated with chemicals, which on polymerisation may fill the voids in the substrate and/or react with the cell wall biopolymers, thereby increasing the density and consequently the hardness of the material.

Well-known procedures for carrying out this process include firstly treating the wood with styrene, methyl methacrylate, dialhyl phthalate and other monomers containing a vinyl group together with an optional polymerisation catalyst. The treated wood may be then heated, or irradiated for example from a ⁶⁰Co gamma ray source to initiate polymerisation to form a polymer which fills the voids of the cellular structure of the wood. Such a wood composite material has superior hardness properties compared with most natural dense, hard woods.

Similarly, wood may be treated with a reactive chemical such as phenol-formaldehyde resin, which on heating undergoes condensation polymerisation to form a hard, often dark coloured polymer which having reacted with the wood cell wall biopolymers as well as filling the wood cell voids creates a dense, hard (but usually dark coloured) composite material.

EP-A-0252867 relates to a substitute for amino and phenolic resins in the polycondensation of such resins based on formaldehyde for bonding water - penetrable cellulosic particles. The substitute comprises mainly a solution of: (a) either an aldehyde together with an amide or together with a phenol, or a non-resinous condensation product of formaldehyde and urea, and (b) a sugar or a sugar derivative or a by-product thereof or a starch or a mixture thereof, and/or (c) a raw and/or treated lignosulfonate or similar product. The substitute may be used to bond wood chips to form a board.

US 4005039 describes curable compositions for dimensionally stabilising wood by replacing water therein. The described curable compositions comprise (a) at least one modified polyol in which at least two of the free hydroxy groups have been converted to alkyleneamide ether groups; (b) an amino resin precursor containing reactive N-hydroxymethyl groups; (c) a catalyst for catalysing the curing of the composition when heated; and (d) a polar solvent capable of swelling wood.

US 4183997 discloses a method of bonding lignocellulose material, particularly wood, in which there is used a bonding material consisting essentially of at least one sugar or starch or a mixture thereof and, as catalyst, an alkaline salt of a mixture of an alkaline material and an acid salt.

US 5026746 discloses a starch-based binder for non-woven fibres such as polyester, polypropylene, glass fibre or cellulosic fibres. The binder is a hybrid of a starch-polymer graft system and a starch/starch crosslinker system. The starch-polymer graft comprises a particular starch hydrolysate having bound thereto at least one monomer to form a starch-polymer graft compound. Maltodextrins, preferably having a dextrose equivalent of between 2 and 10, are used as the starch hydrolysate. The crosslinking agent may be a formaldehyde-based agent such as a urea-formaldehyde resin, a dimethylol dihydroxy ethylene urea-type resin or a melamine formaldehyde resin.

It is an object of the invention to provide an improved or at least alternative method for densifying lignocellulosic material including wood.

Accordingly the invention may broadly be said to comprise a method of densifying lignocellulosic material, comprising impregnating the lignocellulosic material with a maltodextrin (as herein defined) having a dextrose equivalent of 10 to 30 and cross-linking or curing the maltodextrin to substantially insolubilise the cross-linked product, to form a composite material.

The maltodextrin may be impregnated into the lignocellulosic material together with a cross-linking agent having at least one hydroxyl group or alkylated hydroxyl group, or the maltodextrin may be pre-reacted with a cross-linking agent having at least one hydroxyl group or alkylated hydroxyl group to partially cross-link the maltodextrin and cross-linking agent prior to impregnation into the lignocellulosic material, for example.

The invention also comprises a composite material whenever produced by the method of the invention. Other aspects of the invention as well as preferred features thereof appear in the claims.

The method of the invention may be used to densify wood including solid wood whether softwood or hardwood, such as blocks, planks, cut, turned or fashioned wood or wooden articles, and including reconstituted wood products such as particle board, fibreboard, and wafer board for example, and also other non-wood lignocellulosic materials such as for example cardboard and paper.

Wood or other lignocellulosic material treated by the method of the invention is densified and may also have improved hardness, impact resistance, strength and water repellency, as well as possibly improved gluability, bond strength, decay resistance, and stability to light induced discolouration, when compared with untreated lignocellulosic material. Also, the wood may have improved decorative properties. The surface of maltodextrin-densified wood composite has an attractive appearance when polished and is less "plastic" or synthetic in appearance than composites manufactured from wood and vinyl monomers such as methyl methacrylate for example.

Any suitable maltodextrin having a dextrose value of 10 to 30 as determined by the Fehlings solution titration method may be employed. Maltodextrin in this specification means a polysaccharide derived from α-1,4 linked α-D-glucose. Specific maltodextrins are given chain length names and examples of maltodextrins include maltotetraose, maltohexaose, and maltodecaose. Maltodextrin includes stereo and optical isomers thereof. Particularly preferred are those maltodextrins having a dextrose equivalent in the range 15 to 30.

The maltodextrin may be alone or in combination with one or more other maltodextrins or combined with other water-soluble carbohydrates such as starch hydrolysates including other dextrins, carbohydrate gums, and resins for example.

Maltodextrin in this specification also includes maltodextrins specifically modified for example by acetylation, sulphonation, dehydration, etc.

Preferably the cross-linking agent comprises a compound having an alkylated hydroxymethyl, hydroxymethylene, or hydroxymethine group, such as an alkylated methylolmelamine, a glycoluril, a benzoguanamine or a methylurea resin. A particularly preferred cross-linking agent is hexamethylmethylolmelamine. In this case the ratio of maltodextrin molecules to cross-linking agent molecules is preferably in the range 2:1 to 5:1 and most preferably 4:1.

Another suitable cross-linking agent comprises a non-alkylated methylol group which reacts with the maltodextrin, the product being cross-linked via vinyl group polymerisation. In this case the ratio of maltodextrin molecules to cross-linking agent molecules is preferably 1:1.

According to the invention, lignocellulosic substrates are densified to form composite materials. The material, for example solid wood or wood veneer is impregnated preferably under conditions of reduced, then elevated pressure at ambient temperature with a maltodextrin, either mixed with a cross-linking agent, or previously reacted including condensed with a cross-linking agent, preferably in an aqueous formulation, or in a suitable solvent. Any desired evacuation - pressure schedule including evacuation and/or pressure and/or cycles of same as known in the art for impregnating wood, typically utilising evacuation and/or pressure in the range - 85 kPa g to 1400 kPa g may be employed.

After impregnation into the wood, the maltodextrin is cross-linked or cured to substantially insolubilise the maltodextrin to form the lignocellulosic-polymer composite. The impregnated wood may be heated in a oven or kiln at a temperature and for a time sufficient to cause drying of the substrate and cross-linking and curing of the maltodextrin, or further cross-linking if the maltodextrin has been partially cross-linked prior to impregnation, to a hard polymer-type material within the wood structure.

The wood may be subjected to a temperature from ambient temperature to 150°C, most preferably in the range 50 to 140°C, and particularly at about 70°C. Heating can be for a time of from many days at low temperatures, to a few minutes at higher temperatures, depending on the wood dimensions. Cross-linking or curing may be carried out in a production situation by the impregnated wood being dried in a conventional or high temperature wood seasoning kiln, or during hot pressing of impregnated veneers to a substrate. At temperatures in the range 50 to 70°C heating may typically be carried out for a time of from 12 to 250 hours, depending on the wood dimensions. Cross-linking or curing may be carried out without use of an oven or kiln, by allowing the wood to air dry for a number of such as 100 days, but the time required may be excessively long for commercial manufacture.

In the case of veneers, lamination of the treated veneers onto a suitable substrate may be accomplished by cold-pressing followed by a brief heating period typically of a few minutes to a temperature in the range 80 to 150°C to effect cross-linking similar to conventional plywood manufacturing conditions, but typically at 140°C for 3 to 20 minutes depending on the substrate thickness.

At the same time as the maltodextrin is impregnated into the wood, additives such as preservatives, fire retardants, or wood colouring agents may also be deposited in the wood and fixed therein when the maltodextrin is insolubilised. Thus in a single treatment the wood may be densified, as well as preservative and fire retardancy treated and also coloured if desired.

The following examples further illustrate the invention. The examples are of the treatment of wood but the method of the invention can be applied to other lignocellulosic materials such as paper and cardboard. The method of the invention results in filling of voids with a rigid polymeric plastics-type material and also in partial reaction with and strengthening of the cell walls of the lignocellulosic material.

### A. Treatment Formulations

In the examples preparation of the treatment formulations used in each example is separately described for clarity. The treatment solutions were prepared as follows:

### Solution 1

7.907 kg of a maltodextrin of dextrose equivalent = 15 was dissolved in 15.507 kg of water to which was added a solution of 1.493 kg of hexamethylmethylolmelamine as a hydroxyl group cross-linking agent in 1.493 kg of methanol, and also 118 g of boric acid as a preservative, 80.7 g of toluene-p-sulphonic acid as a catalyst, and sorbitan oleate as a non-ionic surfactant. The pH of the resulting emulsion was adjusted to 8 by addition of ammonia solution (density 0.88 g/ml). This mixture tended to separate after standing for several days into an upper layer containing the maltodextrin, and lower layer containing the hexamethylmethylolmelamine, so prior to wood treatment the mixture was thoroughly agitated to form a uniform emulsion. This treatment emulsion had a maltodextrin to hexamethylmethylolmelamine molar ratio of approximately 5:1, a density of approximately 1.12 g/ml⁻¹, a viscosity of 70 cps at 20°C (Brookfield Viscometer spindler No. 5 at 100 rpm), and a solids content of 37%.

### Solution 2

7.149kg of a maltodextrin of dextrose equivalent = 10 was dissolved in 14.750 kg of water,to which was added a solution of 2.252kg of hexamethylmethylolmelamine as a hydroxyl group cross-linking agent in 2.250kg of methanol. 107g of boric acid was added as a preservative, and 73g of toluene-p-sulphonic acid as a catalyst. The mixture was stirred at 20°C for 4-5 hrs in an open vessel until all the hexamethylmethylolmelamine methanol solution had dissolved in the aqueous layer, by partial reaction of the methylated methylol groups with the hydroxyl groups of the maltodextrin. After a clear, homogenous solution was obtained, ammonia (density 0.88 g/ml) was added to bring the pH to 8 in order to arrest any further reaction. This solution was found to be stable for many months at pH 8, and to have a maltodextrin to hexamethylmethylolmelamine molar ratio of approximately 3:1, a density of approximately 1.12 g/mL, a viscosity of 50 cps at 20°C (Brookfield Viscometer spindle No. 5 at 100 rpm), and a solids content of 36%.

### Solution 3

5.957kg of maltodextrin of dextrose equivalent = 28 was dissolved 13.6kg of water and was treated with a solution of a 3.4kg of hexamethylmethylolmelamine in 3.4 kg of methanol. 89kg of boric acid was added as a preservative and 61g of toluene-p-sulphonic acid as a catalyst. The mixture was stirred at 20°C for 4-5 hours in an open vessel until all the hexamethylmethylolmelamine methanol solution had dissolved in the aqueous layer, by partial reaction of the methylated methylol groups with the hydroxyl groups of the maltodextrin. A clear, homogenous solution was obtained. Ammonia (density 0,88 g/mL) was added to bring the pH to 8 in order to arrest any further reaction. This solution was stable at pH 8, and had a maltodextrin to hexamethylmethylolmelamine molar ratio of approximately 2:1, a density of approximately 1.10 g/ml, a viscosity of 50 cps at 20°C, and a solids content of 37%.

### Solution 4

15.8 kg of a maltodextrin of dextrose equivalent = 15 was dissolved in 20.0kg of water to which was added 0.24kg of boric acid as a preservative and 0.04kg of toluene-p-sulphonic acid catalyst. To this solution was added in one portion, a solution of 3.73kg hexamethylmethylolmelamine in 16.00kg of methanol and the mixture was then stirred at 20-25°C for 2-3 hours during which time partial cross linking of the hexamethylmethylolmelamine with the maltodextrin occurred. After a clear, homogenous solution had formed, ammonia (density of 0.88 g/mL) was added to bring the pH to 8 in order to arrest any further hydroxyl group reaction with the hexamethylmethylolmelamine. Finally, 0.08kg of cyanoguanidine was added to trap any free formaldehyde in the finished formulation. The formulation which had a maltodextrin to hexamethylmethylolmelamine molar ratio of 4:1 is stable for many months at pH 8, and had a density of 1.1g/ml and a viscosity of 60 cps at 20°C (Brookfield Viscometer, spindle No.5. 100rpm).

### Solution 5

19.8kg of a maltodextrin of dextrose equivalent = 15 is dissolved in 42kg of water and to the solution was added 0.39kg of boric acid, and 0.09kg toluene-p-sulphonic acid catalyst. 9.3kg of N- methylolacrylamide as a cross-linking agent was added to the stirred solution, and the mixture stirred at 20°C for 4 hours until homogenous during which time the N-methylolacrylamide reacted with the maltodextrin. To the final formulation was added 0.033kg of p-methoxyphenol as polymerisation inhibitor. The solution was stable for many months kept in plastic containers, and sealed from contact with air. The solution had a viscosity of 60 cps at 20°C (Brookfield viscometer).

### B. Impregnation and Curing

### Example 1 - Solid Wood

Blocks of radiata pine sapwood (Pinus radiata) of dimensions 200 x 45 x 45 mm having a density of 410-480 kg/m³, and a moisture content of 12% were placed in a Parr high pressure reaction vessel (suitable for 1400 kPa or 200 psi). Blocks of glass were placed on the wood to prevent the blocks from floating. The vessel was sealed and evacuated to -85kPa g at ambient temperature. Sufficient of treatment solution 1 was passed into the vessel through a valved port to completely cover the blocks, with an excess volume greater than that of the wood after the vessel had been evacuated. After 15 minutes the vessel was pressurised to 1400 kPa g for 2 hours. Then the remaining solution was pumped out and the vessel opened. The impregnated wood was then heated at a temperature of 70°C for 50 hours for cross linking of the maltodextrin, and drying.

### Example 2 - Solid Wood

Planks of radiata pine sapwood of up to 100 x 50 x 100 mm were placed in a treatment vessel and the vessel was sealed. The wood planks were evacuated separately to -85kPa g. Sufficient treatment solution 2 was then introduced through a valved port. The wood was subjected to a vacuum-pressure cycle as described in example 1.

### Example 3 - Veneer

Sheets of radiata pine veneer were placed in an autoclavable container. The sheets were weighed down and then covered with treatment solution 3. The container was then placed in a large pressure chamber. The chamber was sealed and evacuated and after five minutes at a vacuum of -80 kPa g the vacuum was collapsed and the pressure raised to 700 kPa g for 30 minutes. The pressure was then released and the veneers removed for air-drying. After drying for two hours, the veneer sheets were glued to the face of a section of five-ply radiata pine plywood using urea-formaldehyde adhesive and then pressed under 10 tonnes force with the press at 80°C for six minutes. This was sufficient to cross link the maltodextrin and cure the adhesive. The surface of the veneer was then lightly sanded and polished.

### Example 4 - Veneer

Veneers were treated and hot pressed as described in Example 3 but using treatment solution 2, and then hot pressed to five-ply radiata pine plywood as described in Example 3 but at 140°C for five minutes.

### Example 5

Samples of radiata pine sapwood of dimensions 100 x 15 x 15 mm were treated as described in Example 1 using solution 2 and after curing were tested for surface hardness by measuring the force required to indent the surface by 1 mm using a stainless steel wedge. A mean hardness of 200 MPa was recorded which compared with the range of 60-90 MPa for untreated radiata pine sapwood, and 100-110 for kiln-dried radiata pine sapwood.

### Example 6

Samples of radiata pine sapwood of dimensions 90 mm tangential x 18 mm radial x 125 mm longitudinal were treated using as in Example 2 using solution 4 and after curing were tested for impact resistance by measuring the depth of indentation when a 4.6kg weight with a hemi-spherical head of 25.3 mm diameter was dropped from a height of 500 mm on to the tangential face of each sample. Measurements were made at three points on each of five treated and five untreated samples. The mean depth of indentation of untreated samples was greater than the mean depth of indentation of treated samples (statistically significant at the 5% level).

### Example 7

Samples of radiata pine sapwood, selected on the basis of minimal grain deviation, of dimensions 150 x 10 x 10 mm were treated as described in Example 2 using solution 4, and were tested for stiffness (modulus of elasticity - MOE) and bending strength (modulus of rupture - MOR). Measurements were made on 10 treated samples and 10 matching samples of untreated radiata pine sapwood.

Mean MOE and MOR for treated and untreated are summarised as:

| | **MOE (10**^{**10**}**N/m**^{**2**}**)** | **MOR 10**^{**6**}**N/m**^{**2**}**)** |
|---|---|---|
| Treated | 1.263 | 87.7 |
| Untreated | 1.132 | 109.7 |

These data show that the composite material has 25% better strength while maintaining the same flexibility as compared with untreated wood.

### Example 8

Samples of radiata pine sapwood of dimensions 40 mm x 40 mm x 5 mm longitudinal were treated as described in Example 2 using solution 2. The samples were then exposed to one white-rot and three brown-rot fungi in a modified version of the British Standard 6009 test proceduie. Weight losses for treated and untreated material after eight weeks exposure were as shown below.

| | **Weight Loss (%)** | |
|---|---|---|
| **Fungus** | **Treated** | **Untreated** |
| C. versicolor | 1.53 | 8.58 |
| C. puteana | 1.10 | 31.80 |
| F. gilvus | 0.09 | 9.40 |
| G. sepiarium | 0.35 | 12.60 |

The results showed that the material was essentially decay-resistant under the simulated above-ground conditions of the test.

### Example 9

Samples of radiata pine sapwood were treated as described in Example 2 using solution 2 and after curing were exposed outdoors on 45° exposure racks facing north (Southern hemisphere). Colour saturation of depth of colour was measured as a function of time and compared with that of untreated samples. After four months the colour saturation of the untreated samples had decreased by 65% whereas the colour saturation of the treated samples had only decreased by 15%. Similarly prepared samples of radiata pine sapwood were placed behind glass in cabinets facing north (Southern hemisphere) on a test fence. Colour was measured in L*a*b* colour space coordinates after 44 days exposure. Changes in average L*a*b* values were expressed as follows:

| | **% change from original** | | |
|---|---|---|---|
| | **L* (lightness)** | **a* (red-green axis)** | **b* (yellow-blue axis)** |
| Treated | | | |
| - in light | -2.6 | +3.5 | +7.0 |
| - protected from light | -1.3 | +3.2 | +1.1 |

| Untreated | | | |
|---|---|---|---|
| - in light | -4.8 | +11 | +38 |

The smaller difference in b* value recorded for the treated material is indicative of less yellowing in the treated material than in untreated material and this is evidenced on examining the samples

### Example 10

Samples of radiata pine sapwood of dimensions 230 x 63 x 19 mm were treated using as in Example 2 using solution 2, cured, and then tested for gluability using three adhesive types and the ASTM D-905 shear block test procedure. The mean force at failure for treated samples and untreated controls is summarised below:

| | **Mean force at failure (MPa)** | |
|---|---|---|
| **Adhesive** | **Treated** | **Untreated** |
| Resorcinol-formaldehyde | 15.11 | 10.14 |
| Epoxy | 9.89 | 8.62 |
| Urea-formaldehyde | 13.00 | 10.44 |

In each case the bond strength as measured by the shear block test was significantly greater for the treated samples than for the untreated samples.

### Example 11

Samples of radiata pine sapwood of dimensions 100 x 15 x 15 mm were prepared as in Example 2 using solution 4 and after curing were tested for surface hardness by measuring the force required to indent the surface by 0.2 mm and by 1 mm using a stainless steel wedge. Mean hardness values of 280 MPa at 0.2 mm wedge penetration and 220 MPa at 1.0 mm wedge penetration were recorded which compared with a range of 60-90 MPa for untreated radiata pine sapwood, and 100-110 mPa, for kiln-dried radiata pine sapwood.

### Example 12

Samples of radiata pine sapwood of dimensions 100 x 15 x 15 mm were treated as in Example 2 using solution 5 and after curing were tested for surface hardness as in Example 11. Mean hardness values of 180 MPa at 0.2 mm wedge penetration and 166 MPa at 1.0 mm wedge penetration were recorded.

The foregoing describes the invention and examples thereof. Alterations and modifications as will be obvious to those skilled in the art are intended to be incorporated in the scope of the invention, as defined in the following claims.

## Claims

1. A method of densifying lignocellulosic material, comprising impregnating the lignocellulosic material with a maltodextrin which is a polysaccharide derived from α-1, 4 linked α-D-glucose and has a dextrose equivalent of 10 to 30 and a cross-linking agent and cross-linking or curing the maltodextrin to substantially insolubilise the cross-linked product, to form a composite material.

2. A method as claimed in Claim 1, wherein the cross-linking agent has at least one hydroxyl group or alkylated hydroxyl group.

3. A method as claimed in Claim 1, wherein the maltodextrin is pre-reacted with a cross-linking agent having at least one hydroxyl group or alkylated hydroxyl group to partially cross-link the maltodextrin and cross-linking agent prior to impregnation into the lignocellulosic material.

4. A method as claimed in either one of claims 2 and 3, wherein the cross-linking agent comprises a compound having an alkylated hydroxymethyl, hydroxymethylene, or hydroxymethine group.

5. A method as claimed in Claim 4, wherein the cross-linking agent is selected from the group comprising alkylated methylolmelamines, glycolurils, benzoguanamines and methylol resins.

6. A method as claimed in Claim 5, wherein the cross-linking agent is hexamethylmethylolmelamine.

7. A method as claimed in either one of Claims 2 and 3, wherein the cross-linking agent comprises a non-alkylated methylol group and wherein cross-linking of the maltodextrin occurs via vinyl group polymerisation.

8. A method as claimed in Claim 7, wherein the cross-linking agent is N-methylolacrylamide.

9. A method as claimed in any one of Claims 1 to 8, wherein the maltodextrin is partially reacted with a cross-linking agent having at least one hydroxyl group or alkylated hydroxyl group and the partial reaction is stopped by addition of ammonia; and wherein the lignocellulosic material is impregnated with the mixture resulting from the partial reaction and, following impregnation, the lignocellulosic material is heated to a temperature of from 50 to substantially 140°C.

10. A method as claimed in any one of Claims 1 to 9, wherein the maltodextrin has a dextrose equivalent in the range 15 to 30.

11. A method as claimed in any one of Claims 1 to 9, wherein the ratio of cross-linking agent molecules to maltodextrin molecules is in the range 2:1 to 5:1.

12. A method as claimed in Claim 11, wherein the ratio of cross-linking agent molecules to maltodextrin molecules is about 1:1.

13. A method as claimed in any one of Claims 1 to 12, wherein impregnation is carried out in a scaled treatment vessel utilising evacuation and/or pressure in the range -85 kPa g to 1400 kPa g.

14. A method as claimed in any one of Claims 1 to 13, wherein cross-linking is carried out at a temperature in the range 50 to 140°C.

15. A method as claimed in any one of Claims 1 to 14, wherein the lignocellulosic material is wood.

16. A method as claimed in any one of Claims 1 to 12, wherein the lignocellulosic material is wood in the form of wood veneers and cross-linking or curing is carried out by hot pressing the veneer to a substrate after impregnation or by cold pressing the veneer to a substrate after impregnation followed by heating the veneer.

17. A method of densifying lignocellulosic material comprising:
(a) partially reacting a maltodextrin which is a polysaccharide derived from α-1, 4 linked α-D-glucose and has a dextrose equivalent of 10 to 30 with a cross-linking agent. having at least one hydroxyl group or alkylated hydroxyl group.
(b) stopping the partial reaction by addition of ammonia;
(c) impregnating lignocellulosic material with the mixture resulting from the partial reaction; and
(d) following impregnation, heating the lignocellulosic material to a temperature of from 50 to 140°C.

18. A method as claimed in Claim 17, wherein the cross-linking agent is hexamethylmethylolmelamine.

19. Densified lignocellulosic material produced by the method of any one of Claims 1 to 18.

20. The use of a composition comprising maltodextrin which is a polysaccharide derived from α-1, 4 linked α-D-glucose and has a dextrose equivalent of 10 to substantially 30 and a cross-linking agent for densifying lignocellulosic material.

21. The use of Claim 20, which further includes the feature(s) recited in one or more of Claims 2 to 6, 8 or 10 to 12.

22. The use of Claim 20 or Claim 21 and including the feature(s) recited in one or more of Claims 2, 3 10, 11 or 12, wherein the cross-linking agent comprises a non-alkylated methylol group and wherein cross-linking of the maltodextrin occurs via vinyl group polymerisation.

23. The use of claim 20, wherein the maltodextrin has been partially reacted with a cross-linking agent having at least one hydroxyl group or alkylated hydroxyl group before the partial reaction has been stopped by addition of ammonia.

24. The use of Claim 23, wherein the cross-linking agent is hexamethylmethylolmelamine.

25. The use as claimed in any one of Claims 23 or 24, wherein the composition comprises toluene-p-sulphonic acid as a catalyst.

26. The use of any one of Claims 23 to 25, wherein said pH is substantially 8.

## Patentansprüche

1. Verfahren zum Verdichten von lignocellulosischem Material, umfassend
Imprägnieren des lignocellulosischen Materials mit einem Maltodextrin, das ein Polysaccharid abgeleitet von einer α-1,4-verbundenen α-D-Glucose ist und ein Dextrose-Äquivalent von 10 bis 30 hat, und einem Vernetzungsmittel und
Vernetzen oder Härten des Maltodextrins, um das vernetzte Produkt im wesentlichen unlöslich zu machen,
zur Bildung eines Verbundmaterials.

2. Verfahren nach Anspruch 1, wobei das Vernetzungsmittel mindestens eine Hydroxylgruppe oder alkylierte Hydroxylgruppe enthält.

3. Verfahren nach Anspruch 1, wobei das Maltodextrin zunächst mit einem Vernetzungsmittel, das mindestens eine Hydroxylgruppe oder alkylierte Hydroxylgruppe enthält, umgesetzt wird, um das Maltodextrin und das Vernetzungsmittel vor der Imprägnierung in das lignocellulosische Material teilweise zu vernetzen.

4. Verfahren nach einem der Ansprüche 2 oder 3, wobei das Vernetzungsmittel eine Verbindung mit einer alkylierten Hydroxymethyl-, Hydroxymethylen- oder Hydroxymethingruppe umfaßt.

5. Verfahren nach Anspruch 4, wobei das Vernetzungsmittel aus der Gruppe umfassend alkylierte Methylolmelamine, Glykolurile, Benzoguanamine und Methylolharze ausgewählt ist.

6. Verfahren nach Anspruch 5, wobei das Vernetzungsmittel Hexamethylmethylolmelamin ist.

7. Verfahren nach einem der Ansprüche 2 oder 3, wobei das Vernetzungsmittel eine nicht-alkylierte Methylolgruppe umfaßt und wobei die Vernetzung des Maltodextrins durch Vinylgruppen-Polymerisation stattfindet.

8. Verfahren nach Anspruch 7, wobei das Vernetzungsmittel N-Methylolacrylamid ist.

9. Verfahren nach einem der Ansprüche 1 bis 8, wobei das Maltodextrin mit einem Vernetzungsmittel, das mindestens eine Hydroxylgruppe oder alkylierte Hydroxylgruppe enthält, teilweise umgesetzt, und die Teilumsetzung durch Zugabe von Ammoniak abgebrochen wird; und wobei das lignocellulosische Material mit dem aus der Teilumsetzung erhaltenen Gemisch imprägniert und danach auf eine Temperatur von 50 bis im wesentlichen 140°C erhitzt wird.

10. Verfahren nach einem der Ansprüche 1 bis 9, wobei das Maltodextrin ein Dextrose-Äquivalent im Bereich von 15 bis 30 hat.

11. Verfahren nach einem der Ansprüche 1 bis 9, wobei das Verhältnis von Vernetzungsmittel-Molekülen zu Maltodextrin-Molekülen im Bereich von 2:1 bis 5:1 liegt.

12. Verfahren nach Anspruch 11, wobei das Verhältnis von Vernetzungsmittel-Molekülen zu Maltodextrin-Molekülen etwa 1:1 beträgt

13. Verfahren nach einem der Ansprüche 1 bis 12, wobei die Imprägnierung in einem geschlossenen Behandlungsgefäß unter Einsatz von vermindertem Druck und/oder Druck im Bereich von - 0,84 atü bis 13,8 atü (-85 kPa g bis 1400 kPa g) durchgeführt wird.

14. Verfahren nach einem der Ansprüche 1 bis 13, wobei die Vernetzung bei einer Temperatur im Bereich von 50 bis 140 °C durchgeführt wird.

15. Verfahren nach einem der Ansprüche 1 bis 14, wobei das lignocellulosische Material Holz ist.

16. Verfahren nach einem der Ansprüche 1 bis 12, wobei das lignocellulosische Material Holz in Form von Holzfurnieren ist und das Vernetzen oder Härten durch Heißpressen des Furniers auf einen Träger nach der Imprägnierung oder durch Kaltpressen des Furniers auf einen Träger nach der Imprägnierung und anschließendem Erhitzen des Furniers, durchgeführt wird.

17. Verfahren zum Verdichten von lignocellulosischem Material, umfassend:
(a) teilweise Umsetzen eines Maltodextrins, das ein Polysaccharid abgeleitet von einer α-1,4-verbundenen α-D-Glucose ist und ein Dextrose-Äquivalent von 10 bis 30 hat, mit einem Vernetzungsmittel, das mindestens eine Hydroxylgruppe oder alkylierte Hydroxylgruppe enthält;
(b) Abbrechen der Teilumsetzung durch Zugabe von Ammoniak;
(c) Imprägnieren von lignocellulosischem Material mit dem aus der Teilumsetzung erhaltenen Gemisch; und
(d) Erhitzen des lignocellulosischen Materials nach der Imprägnierung auf eine Temperatur von 50 bis 140°C.

18. Verfahren nach Anspruch 17, wobei das Vernetzungsmittel Hexamethylmethylolmelamin ist.

19. Verdichtetes lignocellulosisches Material, das mit dem Verfahren nach einem der Ansprüche 1 bis 18 hergestellt ist.

20. Verwendung einer Zusammensetzung umfassend Maltodextrin, das ein Polysaccharid abgeleitet von einer α-1,4-verbundenen α-D-Glucose ist und ein Dextrose-Äquivalent von 10 bis 30 hat, und ein Vernetzungsmittel zum Verdichten von lignocellulosischem Material.

21. Verwendung nach Anspruch 20, weiter einschließend das/die in einem oder mehreren der Ansprüche 2 bis 6, 8 oder 10 bis 12 angegebene(n) Merkmal(e).

22. Verwendung nach Anspruch 20 oder 21 und einschließend das/die in einem oder mehreren der Ansprüche 2, 3, 10, 11 oder 12 angegebene(n) Merkmal(e), wobei das Vernetzungsmittel eine nicht-alkylierte Methylolgruppe umfaßt und wobei das Vernetzen des Maltodextrins durch Vinylgruppen-Polymerisation stattfindet.

23. Verwendung nach Anspruch 20, wobei das Maltodextrin mit einem Vernetzungsmittel, das mindestens eine Hydroxylgruppe oder alkylierte Hydroxylgruppe enthält, teilweise umgesetzt wurde, bevor die Teilumsetzung durch Zugabe von Ammoniak abgebrochen wurde.

24. Verwendung nach Anspruch 23, wobei das Vernetzungsmittel Hexamethylmethylolmelamin ist.

25. Verwendung nach einem der Ansprüche 23 oder 24, wobei die Zusammensetzung p-Toluolsulfonsäure als Katalysator umfaßt.

26. Verwendung nach einem der Ansprüche 23 bis 25, wobei der pH-Wert im wesentlichen 8 beträgt.

## Revendications

1. Procédé de densification d'un matériau ligno-cellulosique, comprenant les étapes consistant à imprégner le matériau ligno-cellulosique avec une maltodextrine, qui est un polysaccharide dérivé d'unités α-D-glucose liés en α-1, 4 et possède un équivalent dextrose de 10 à 30, et un agent de réticulation, et à réticuler ou cuire la maltodextrine pour insolubiliser substantiellement le produit réticulé, de façon à former un matériau composite.

2. Procédé selon la revendication 1, caractérisé en ce que l'agent de réticulation possède au moins un groupe hydroxyle ou un groupe hydroxyle alkylé.

3. Procédé selon la revendication 1, caractérisé en ce qu'on fait préalablement réagir la maltodextrine avec un agent de réticulation possédant au moins un groupe hydroxyle ou un groupe hydroxyle alkylé, de façon à réticuler partiellement la maltodextrine et l'agent réticulant avant l'imprégnation du matériau ligno-cellulosique.

4. Procédé selon l'une quelconque des revendications 2 ou 3, caractérisé en ce que l'agent de réticulation comprend un composé possédant un groupement méthoxy alkylé, hydroxyméthylène ou hydroxyméthine.

5. Procédé selon la revendication 4, caractérisé en ce que l'agent de réticulation est choisi dans le groupe comprenant les méthylolmélamines alkylées, les glycoluryles, les benzoguanamines et les résines de méthylol.

6. Procédé selon la revendication 5, caractérisé en ce que l'agent de réticulation est l'hexaméthylolmélanine.

7. Procédé selon l'une quelconque des revendications 2 ou 3, où l'agent de réticulation comprend un groupement méthylol non alkylé et caractérisé en ce que la réticulation de la maltodextrine s'opère via la polymérisation du groupement vinyle.

8. Procédé selon la revendication 7, caractérisé en ce que l'agent de réticulation est la N-méthylolacrylamide.

9. Procédé selon l'une quelconque des revendications 1 à 8, caractérisé en ce qu'on fait réagir partiellement la maltodextrine avec un agent de réticulation possédant au moins un groupement hydroxyle ou un groupement hydroxyle alkylé, la réaction partielle étant interrompue par addition d'ammoniaque, et où le matériau ligno-cellulosique est imprégné avec le mélange issu de la réaction partielle, et où, après l'imprégnation, le matériau ligno-cellulosique est chauffé à une température allant de 50 à environ 140°C.

10. Procédé selon l'une quelconque des revendications 1 à 9, caractérisé en ce que la maltodextrine possède un équivalent dextrose de 15 à 30.

11. Procédé selon l'une quelconque des revendications 1 à 9, caractérisé en ce que le rapport des agents de réticulation par rapport aux molécules de maltodextrine est compris entre 2 :1 et 5 :1.

12. Procédé selon la revendication 11, caractérisé en ce que le rapport des agents de réticulation par rapport aux molécules de maltodextrine est situé aux alentours de 1 :1,

13. Procédé selon l'une quelconque des revendications 1 à 12, caractérisé en ce que l'étape d'imprégnation s'opère dans une cuve de traitement par paliers utilisant une évacuation et/ou une pression allant de -85 kPa g à 1 400 kPa g.

14. Procédé selon l'une quelconque des revendications 1 à 13, caractérisé en ce que l'étape de réticulation s'opère à une température allant de 50 à 140°C.

15. Procédé selon l'une quelconque des revendications 1 à 14, caractérisé en ce que le matériau ligno-cellulosique est du bois.

16. Procédé selon l'une quelconque des revendications 1 à 12, caractérisé en ce que le matériau ligno-cellulosique est du bois, sous la forme de bois contre-plaqué et où la réticulation ou la cuisson s'effectuent en comprimant à chaud le contre-plaqué sur un support après l'imprégnation, ou en comprimant à froid le contre-plaqué après imprégnation, cette étape à froid étant suivie par un chauffage du contre-plaqué.

17. Procédé de densification d'un matériau ligno-cellulosique comprenant les étapes consistant à :
(a) faire réagir partiellement une maltodextrine, qui est un polysaccharide dérivé d'unités α-D-glucose liés en α-1, 4 et possède un équivalent dextrose de 10 à 30, avec un agent de réticulation possédant au moins un groupement hydroxyle ou un groupement hydroxyle alkylé ;
(b) interrompre la réaction partielle par addition d'ammoniaque ;
(c) imprégner le matériau ligno-cellulosique avec le mélange issu de la réaction partielle ; et
(d) suite à l'imprégnation, chauffer la matériau ligno-cellulosique à une température allant de 50 à 140°C.

18. Procédé selon la revendication 17, caractérisé en ce que l'agent de réticulation est l'hexaméthylméthylolmélamine.

19. Matériau ligno-cellulosique densifié, produit selon le procédé de l'une quelconque des revendications 1 à 18.

20. Utilisation d'une composition comprenant une maltodextrine qui est un polysaccharide dérivé d'unités α-D-glucose liés en α-1, 4 et possède un équivalent dextrose de 10 à 30, et d'un agent de réticulation pour densifier un matériau ligno-cellulosique.

21. Utilisation selon la revendication 20, caractérisée en ce qu'elle inclut de plus la ou les caractéristique(s) citée(s) dans l'une ou plusieurs des revendications 2 à 6, 8 ou 10 à 12.

22. Utilisation selon la revendication 20 ou la revendication 21 et incluant la ou les caractéristique(s) citée(s) dans l'une ou plusieurs des revendications 2, 3, 10, 11 ou 12, caractérisée en ce que l'agent de réticulation comprend un groupement méthylol non alkylé et où la réticulation de la maltodextrine s'opère va la polymérisation du groupement vinyle.

23. Utilisation selon la revendication 20, caractérisée en ce qu'on fait partiellement réagir la maltodextrine avec un agent hydroxyle alkylé avant d'interrompre la réaction partielle par addition d'ammoniaque.

24. Utilisation selon la revendication 23, caractérisée en ce que l'agent de réticulation est l'hexométhylméthylolmélamine.

25. Utilisation selon l'une quelconque des revendications 23 ou 24, caractérisée en ce que la composition comprend de I'acide toluène-p sulfonique agissant comme catalyseur.

26. Utilisation selon l'une quelconque des revendications 23 à 25, caractérisée en ce que ledit pH est substantiellement de 8.
